# EUROPEAN PATENT SPECIFICATION

(11) **EP 0 894 560 B1**
(45) Date of publication and mention of the grant of the patent: **23.04.2003**
(21) Application number: 98306105.2
(22) Date of filing: 30.07.1998
(51) Int. Cl.: B23B 49/02

(54) **Apparatus for use in drilling**
Bohrbuchse
Canon de guidage à forer

(30) Priority: 02.08.1997 GB 9716356
(43) Date of publication of application: 03.02.1999
(73) Proprietor: Merritt, Ernest George William, Stoke-on-Trent, Staffordshire, ST6 8PL (GB)
(72) Inventor: Merritt, Ernest George William, Stoke-on-Trent, Staffordshire, ST6 8PL (GB)
(74) Representative: Swindell & Pearson

(56) References cited:
- DE-A- 1 960 440
- GB-A- 563 397
- GB-A- 2 313 563
- US-A- 3 011 369
- US-A- 3 381 551
- US-A- 3 851 990
- US-A- 5 087 158

## Description

The invention relates to an apparatus according to the preamble of claim 1 for use in drilling, and particularly but not exclusively to an apparatus for use in drilling into an object having a shiny or slippery surface.

When drilling into an object such as a tile, which often has a shiny or slippery surface, it is common for the drill bit to slip and to skid across the surface, instead of passing cleanly into the object. This makes the drilling process awkward and time consuming, and can also damage the surface of the object to be drilled.

To alleviate the above problem, it is known when drilling tiles to place a piece of masking tape on the surface of the tile to be drilled so that the tip of the drill can locate on the rough surface of the tape. Although this method reduces the incidence of skidding of the drill bit on the tile surface, it does not completely prevent its occurrence.

From US 3851990 an apparatus for guiding a drill bit when drilling into an object is known, the apparatus comprising: a first portion having a flat surface and being mountable on the surface of the object to be drilled; and a second portion for receiving and guiding a drill bit while this is used to drill Into the object. The drilling guide has an adhesive layer to adhere the guide to the surface of the work piece. During a drilling operation debris cannot escape except along the passage in which the drill bit is operating, thus the drill bit may become clogged with debris.

The problem is solved by an apparatus according to claim 1.

The first portion has a flat surface onto which are located sticky tape or sticky pads for attaching the first portion to the surface of the object to be drilled. Sticky pads are provided on the first portion, with the pads having a stronger adhesive on the side of pad which contacts the first portion, than the side which contacts the surface. Preferably the first portion is approximately planar, and may be substantially disc shaped, with a central hole through which the drill bit may pass. A part of the first portion may have a straight edge to enable alignment relative to a straight edge or line on the surface.

Preferably the first portion may be mounted such that it is spaced from the surface of the object to be drilled. Markings or formations may be provided on the first portion alignable with markings or the like on the object to help correctly locate the apparatus on the object.

Preferably the second portion includes a substantially cylindrical passage for receiving the drill bit. It is desirable that the diameter of this passage be just greater than the external diameter of the drill bit to be received. Preferably the second portion extends perpendicularly from the first portion, with the axis of the passage being perpendicular to a plane in which the first portion lies.

Preferably the second portion is substantially tubular in shape, having an approximately cylindrical external shape and an approximately cylindrical passage.

Preferably the first and second portions are made of plastics material. The first and second portions may be made of the same material and may be integral. The apparatus may be made of a translucent or transparent material.

Preferably the apparatus is of a suitable size for use with a hand held drill, having maximum dimensions of about 70mm in any direction. Most preferably the maximum dimension in any direction is about 30mm.

According to a further aspect of the invention, there is provided a set of apparatus as previously defined, the second portions of the apparatus in the set being sized to receive respectively different sized drill bits. Preferably, each apparatus in the set is of a different colour from the other apparatus in the set.

An embodiment of the invention will now be described by way of example only, with reference to the accompanying drawings, in which:
Fig. 1 is a diagrammatic plan view of a drill guide according to an embodiment of the invention;
Fig. 2 is a diagrammatic side view of the drill guide of Fig. 1; and
Fig. 3 is a diagrammatic side view showing a drill guide according to an embodiment of the invention in use.

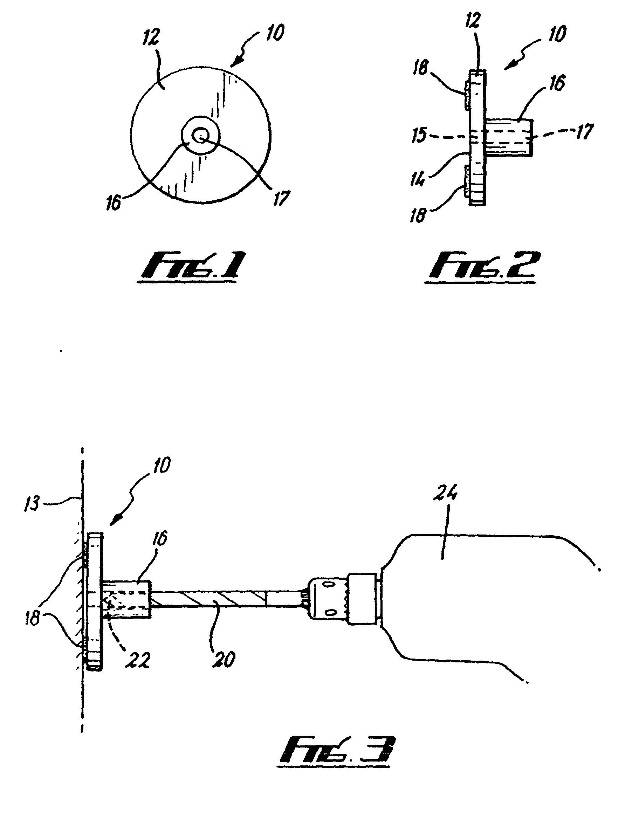

Referring to the drawings, a drill guide 10 includes an approximately disc shaped base 12 for engaging the surface 13 of a tile to be drilled. The base 12 has a flat rear surface 14 and a central hole 15. The drill guide 10 also includes an upstanding tubular collar 16 having a cylindrical bore 17 in which a drill bit may be slidingly received. The cylindrical bore 17 is coaxial with the hole 15. The dimensions of the bore 17 are such that a drill bit for use with the drill guide 10 fits closely within the bore 17 without sticking to its sides.

The drill guide 10 is used as follows. The location on the surface 13 of the tile to be drilled is marked with, for example, a marker pen. This mark is not shown in the drawings. A drill guide 10 is chosen which is suitably sized to receive the drill bit to be used, and three sticky pads 18 are stuck to the flat rear surface 14 of the base 12 of the drill guide 10, if not already provided thereon. The pads 18 have a stronger adhesive on the side thereof which adheres to the surface 14 than the side which adheres to the surface 13.

A drill bit 20 (at this time unattached to a drill) is inserted, tip first, into the drill guide 10 such that the tip 22 of the drill bit 20 passes right through the bore 17 in the tubular collar 16 and through the central hole 15 in the base 12. The tip 22 is then located on the mark on the surface 13 to be drilled, while the drill guide 10 is kept away from the tip 22 to prevent it from obscuring the mark. Once the tip 22 is correctly located on the mark, the drill guide 10 is slid towards and then pushed firmly onto the surface 13 such that the pads 18 holds the base 12 firmly against the surface 13. The drill bit 20 is then removed and fitted to a hammer drill or other suitable drilling apparatus 24.

A hole is drilled in the surface 13 by passing the drill bit 20 though the bore 17 in the collar 16 and the hole 15 in the base 12 and drilling. The drill guide 10 may be left in place for the entire drilling operation, or may be used only to locate the drill bit to start a hole. Once a hole has been drilled or started, the drill guide 10 is removed from the surface 13.

The drill guide according to the invention thus allows the drilling of holes accurately in smooth or shiny surfaces as it prevents the drill bit from skidding across the surface to be drilled. It will be understood that the drill guide can be used to ease the drilling of holes in any surface. Holes can be drilled precisely at the marked location, and can easily be drilled in a direction perpendicular to the surface of the object. The pads allow multiple use, and can be replaced if required with fresh pads.

Double sided tape could be used instead of the small pads. The pads though provide gaps around the sticky pads, between the surface 13 and the flat underside 14 of the base 12, through which debris produced by drilling may escape.

The guide 10 may be made of translucent or transparent material to ease correct location thereof. Alternatively or in addition, markings or formations such as raised crossed lines, may be provided on the base 12 to help correct positioning thereof. The markings could comprise four equispaced markings around the axis of the base 12 alignable on a cross drawn through the desired drilling location. The base 12 could have a cut away part with a straight edge for alignment with or against a straight edge or line.

The collar 16 may be longer than as shown, to ease removal thereof from a wall etc. Also, the collar 16 may be provided with inserts to allow it to be modified to fit drill bits of different diameters. Alternatively drill guides according to the invention may be provided in a full range of different sizes corresponding to different size drill bits. Drill guides having different internal bore sizes may be provided in different colours for ease of identification.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. Apparatus for guiding a drill bit when drilling into an object, the apparatus (10) comprising: a first portion (12) mountable on the surface (13) of the object to be drilled; and a second portion (16) for receiving and guiding a drill bit (20) while this is used to drill into the object (13), the first portion (12) having a flat surface (14), **characterised in that** a plurality of discrete, spaced sticky pads (18) are provided on the flat surface (14) for attaching the first portion (12) to the surface (13) of the object to be drilled, in use the sticky pads (18) spacing the flat surface (14) from the object, defining a gap therebetween through which debris produced by drilling may escape.

2. Apparatus according to claim 1, **characterised in that** the sticky pads have a stronger adhesive on the side of pad which contacts the first portion, than the side which contacts the surface.

3. Apparatus according to any of the preceding claims, **characterised in that** the first portion (12) is approximately planar.

4. Apparatus according to claim 3, **characterised in that** the first portion (12) is substantially disc shaped.

5. Apparatus according to any of the preceding claims, **characterised in that** the first portion (12) has a central hole (15) through which the drill bit (20) may pass.

6. Apparatus according to any of the preceding claims, **characterised in that** markings or formations are provided on the first portion (12) alignable with markings or the like on the object (13) to help correctly locate the apparatus (10) on the object (13).

7. Apparatus according to any of the preceding claims, **characterised in that** the second portion (16) includes a substantially cylindrical passage (17) for receiving the drill bit (20).

8. Apparatus according to claim 7, **characterised in that** the diameter of the cylindrical passage (17) is just greater than the external diameter of the drill bit (20) to be received.

9. Apparatus according to claims 7 or 8, **characterised in that** the second portion (16) is substantially tubular in shape, has an approximately cylindrical external shape and an approximately cylindrical passage (17), and extends perpendularly from the first portion, with the axis of the passage being perpendicular to a plane in which the first portion lies.

10. Apparatus according to any of the preceding claims, **characterised in that** the first and second portions (12, 16) are made of plastics material.

11. Apparatus according to any of the preceding claims, **characterised in that** the first and second portions (12, 16) are integral.

12. Apparatus according to any of the preceding claims, **characterised in that** the apparatus (10) is made of a transparent or translucent material.

13. A set of apparatus according to any of the preceding claims, the second portions (16) of the apparatus (10) in the set being sized to receive respectively different sized drill bits (20).

## Patentansprüche

1. Gerät zum Führen eines Bohrers beim Bohren in einem Gegenstand, wobei das Gerät (10) aufweist: einen ersten Abschnitt (12), der an der Oberfläche (13) des Gegenstands befestigbar ist, in dem gebohrt werden soll; und einen zweiten Abschnitt (16) zum Aufnehmen und Führen eines Bohrers (20) während seiner Verwendung zum Bohren in dem Gegenstand (13); wobei der erste Abschnitt (12) eine flache Oberfläche (14) hat, **dadurch gekennzeichnet, dass** eine Vielzahl diskreter, beabstandeter Klebepolster (18) an der flachen Oberfläche (14) vorgesehen sind, um den ersten Abschnitt (12) an der Oberfläche (13) des Gegenstands zu befestigen, in den gebohrt werden soll, wobei die Klebepolster (18), die die flache Oberfläche (14) von dem Gegenstand beabstanden, einen Spalt dazwischen bestimmen, durch den durch das Bohren erzeugter Abrieb entweichen kann.

2. Gerät nach Anspruch 1, **dadurch gekennzeichnet, dass** die Klebepolster auf der Seite des Polsters, das den ersten Abschnitt berührt, einen stärkeren Klebstoff haben als auf der Seite, welche die Oberfläche berührt.

3. Gerät nach einem der vorhergehenden Ansprüche, **dadurch gekennzeichnet, dass** der erste Abschnitt (12) näherungsweise eben ist.

4. Gerät nach Anspruch 3, **dadurch gekennzeichnet, dass** der erste Abschnitt (12) im wesentlichen scheibenförmig ist.

5. Gerät nach einem der vorhergehenden Ansprüche, **dadurch gekennzeichnet, dass** der erste Abschnitt (12) ein mittiges Loch (15) hat, durch welches der Bohrer (20) hindurchtreten kann.

6. Gerät nach einem der vorhergehenden Ansprüche, **dadurch gekennzeichnet, dass** an dem ersten Abschnitt (12) Markierungen oder Formationen vorgesehen sind, die mit Markierungen oder dergleichen an dem Gegenstand (13) ausrichtbar sind, um zu helfen, das Gerät (10) an dem Gegenstand (13) richtig zu positionieren.

7. Gerät nach einem der vorhergehenden Ansprüche, **dadurch gekennzeichnet, dass** der zweite Abschnitt (16) einen im wesentlichen zylindrischen Durchtritt (17) für die Aufnahme des Bohrers (20) enthält.

8. Gerät nach Anspruch 7, **dadurch gekennzeichnet, dass** der Durchmesser des zylindrischen Durchtritts (17) nur etwas größer als der Außendurchmesser des aufzunehmenden Bohrers (20) ist.

9. Gerät nach Anspruch 7 oder 8, **dadurch gekennzeichnet, dass** der zweite Abschnitt (16) im wesentlichen rohrförmig ist, eine näherungsweise zylindrische äußere Form und einen näherungsweise zylindrischen Durchtritt (17) hat, und sich senkrecht von dem ersten Abschnitt erstreckt, wobei die Achse des Durchtritts senkrecht zu einer Ebene verläuft, in welcher der erste Abschnitt liegt.

10. Gerät nach einem der vorhergehenden Ansprüche, **dadurch gekennzeichnet, dass** der erste und der zweite Abschnitt (12, 16) aus Kunststoffmaterial bestehen.

11. Gerät nach einem der vorhergehenden Ansprüche, **dadurch gekennzeichnet, dass** der erste und der zweite Abschnitt (12, 16) einstückig sind.

12. Gerät nach einem der vorhergehenden Ansprüche, **dadurch gekennzeichnet, dass** das Gerät (10) aus einem durchsichtigen oder durchscheinenden Material besteht.

13. Gerätesatz nach einem der vorhergehenden Ansprüche, wobei die zweiten Abschnitte (16) des Geräts (10) in dem Satz derartige Abmessungen haben, dass sie jeweils Bohrer (20) mit einer unterschiedlichen Größe aufnehmen können.

## Revendications

1. Dispositif destiné à guider un foret lors du perçage d'un objet, le dispositif (10) comportant : une première partie (12) pouvant être montée sur la surface (13) de l'objet à percer, et une seconde partie (16) pour recevoir et guider un foret (20) lorsqu'il est utilisé pour percer l'objet (13), la première partie (12) ayant une surface plate (14), **caractérisé en ce qu'**une pluralité de patins collants espacés distincts (18) sont prévus sur la partie plate (14) pour fixer la première partie (12) sur la surface (13) de l'objet à percer, les patins collants, en service, espaçant la surface plate (14) par rapport à l'objet, en définissant un espace entre ceux-ci à travers lequel peuvent s'échapper des débris produits par le perçage.

2. Dispositif selon la revendication 1, **caractérisé en ce que** les patins collants comportent, sur le côté de patin qui vient en contact avec la première partie, un adhésif plus fort que celui situé sur le côté qui vient en contact avec la surface.

3. Dispositif selon l'une quelconque des revendications précédentes, **caractérisé en ce que** la première partie (12) est approximativement plane.

4. Dispositif selon la revendication 3, **caractérisé en ce que** la première partie (12) est sensiblement en forme de disque.

5. Dispositif selon l'une quelconque des revendications précédentes, **caractérisé en ce que** la première partie (12) comporte un trou central (15) à travers lequel peut passer le foret (20).

6. Dispositif selon l'une quelconque des revendications précédentes, **caractérisé en ce que** des marques ou des formations sont prévues dans la première partie (12), qui peuvent être alignées avec des marques ou analogues situées sur l'objet (13), afin d'aider à positionner correctement le dispositif (10) sur l'objet (13).

7. Dispositif selon l'une quelconque des revendications précédentes, **caractérisé en ce que** la seconde partie (16) comporte un passage sensiblement cylindrique (17) pour recevoir le foret (20).

8. Dispositif selon la revendication 7, **caractérisé en ce que** le diamètre du passage cylindrique (17) est juste plus grand que le diamètre extérieur du foret (20) devant être reçu.

9. Dispositif selon la revendication 7 ou 8, **caractérisé en ce que** la seconde partie (16) est sensiblement d'une forme tubulaire, a une forme extérieure et un passage sensiblement cylindriques (17), et s'étend perpendiculairement, depuis la première partie, par rapport à l'axe du passage qui est perpendiculaire à un plan dans lequel s'étend la première partie.

10. Dispositif selon l'une quelconque des revendications précédentes, **caractérisé en ce que** les première et seconde parties (12, 16) sont réalisées en matière plastique.

11. Dispositif selon l'une quelconque des revendications précédentes, **caractérisé en ce que** les première et seconde parties (12, 16) sont formées d'un seul tenant.

12. Dispositif selon l'une quelconque des revendications précédentes, **caractérisé en ce que** le dispositif (10) est réalisé en un matériau transparent ou translucide.

13. Ensemble de dispositifs selon l'une quelconque des revendications précédentes, les secondes parties (16) des dispositifs (10) de l'ensemble étant dimensionnées pour recevoir respectivement des forets de différentes tailles (20).
